# EUROPEAN PATENT APPLICATION

(11) **EP 4 783 333 A1**
(43) Date of publication of application: **29.07.2026**
(21) Application number: 25214662.6
(22) Date of filing: 10.11.2025
(51) Int. Cl.: H01M 50/325, H01M 50/15, H01M 50/186, H01M 50/103

(54) **RECHARGEABLE BATTERY**

(30) Priority: 24.01.2025 KR 20250011922
(71) Applicant: SAMSUNG SDI CO., LTD., Yongin-si, Gyeonggi-do 17084 (KR)
(72) Inventor: CHA, Youngsun, 17084 Yongin-si (KR)
(74) Representative: Marks & Clerk LLP

(57) **Abstract**

A rechargeable battery, including an electrode assembly, a case accommodating the electrode assembly, the case including one side having an open portion, a cap plate sealing the open portion of the case, the cap plate including a through hole, and a pressure controller in the through hole of the cap plate, the pressure controller being open when the pressure inside the case is higher than or equal to a reference value and closed when the pressure inside the case is lower than the reference value.

## Description

### BACKGROUND

### 1. Field

The present disclosure relates to a rechargeable battery.

### 2. Description of the Related Art

Recently, rechargeable batteries are widely used not only for small-sized devices such as portable electronic devices, but also middle-sized and large-sized devices such as battery packs for hybrid or electric vehicles or power storage devices.

These rechargeable batteries are rechargeable generators with a laminated structure of positive electrode/separator/negative electrode. In general, the positive electrode includes lithium metal oxide as a positive electrode active material, and the negative electrode includes a carbon-based negative electrode active material such as graphite so that lithium ions released from the positive electrode are absorbed into the carbon-based negative electrode active material of the negative electrode during charging, and lithium ions contained in the carbon-based negative electrode active material are absorbed into the lithium metal oxide of the positive electrode during discharging, allowing for repeated charging and discharging.

### SUMMARY

Embodiments include a rechargeable battery, including an electrode assembly, a case accommodating the electrode assembly, the case including one side having an open portion, a cap plate sealing the open portion of the case, the cap plate including a through hole, and a pressure controller in the through hole of the cap plate, the pressure controller being open when the pressure inside the case is higher than or equal to a reference value and closed when the pressure inside the case is lower than the reference value.

The pressure controller may include a plurality of first opening and closing portions, one side of each being coupled to an inside of the through hole or the cap plate on the outside of the through hole, another side of each being adjacent to a center of the through hole, and the plurality of first opening and closing portions being at predetermined angles based on the center of the through hole; and a plurality of second opening and closing portions, one side of each being coupled to a corresponding one of the plurality of first opening and closing portions, another side of each being at the center of the through hole, and the plurality of second opening and closing portions being at predetermined angles based on the center of the through hole.

Ends of each of the plurality of second opening and closing portions may overlap each other.

The pressure controller may include a plurality of first opening and closing portions, one side of each being coupled to an inside of the through hole or the cap plate on the outside of the through hole, another side of each being adjacent to a center of the through hole, and the plurality of first opening and closing portions being at predetermined angles based on the center of the through hole; and a plurality of second opening and closing portions, one side of each being coupled to a corresponding one of the plurality of first opening and closing portions, another side of each being at the center of the through hole, and the plurality of second opening and closing portions being at predetermined angles based on the center of the through hole, and a third opening and closing portion coupled to at least one of the plurality of second opening and closing portions, the third opening and closing portion being at the center of the through hole.

The third opening and closing portion may have a disc shape.

The third opening and closing portion may be integral with at least one of the plurality of second opening and closing portions.

The rechargeable battery may further include a sealing member on a surface of the third opening and closing portion facing the plurality of second opening and closing portions.

The sealing member may include silicone or rubber.

The plurality of second opening and closing portions may include an elastically deformable material.

The plurality of second opening and closing portions are together a thin plate spring.

The plurality of first opening and closing portions may be on a same virtual plane.

The plurality of second opening and closing portions may be on a same virtual plane.

The cap plate may further include an electrolyte blocking member in the through hole, allowing gas to pass through but restricting movement of an electrolyte.

The cap plate may further include an adhesive portion between an inner surface surrounding the through hole and the electrolyte blocking member.

The cap plate may further include a protrusion protruding from an inner surface surrounding the through hole to prevent the electrolyte blocking member from moving into the case.

The electrolyte blocking member includes a liquid absorbent material.

The liquid absorbent material may include at least one of pulp, non-woven fabric, and superabsorbent resin.

The case may accommodate an electrolyte.

The case may have a hexahedron shape.

At least some of the above and other features of the invention are set out in the claims.

### BRIEF DESCRIPTION OF THE DRAWINGS

Features will become apparent to those of ordinary skill in the art by describing in detail various embodiments with reference to the attached drawings, in which:
FIG. 1 is a perspective view illustrating a rechargeable battery according to an embodiment of the present disclosure;
FIG. 2 is a cross-sectional view taken along line II-II of FIG. 1;
FIG. 3 is an enlarged perspective view of a pressure control unit included in the rechargeable battery of FIG. 1;
FIG. 4 is an exploded perspective view showing the pressure control unit;
FIG. 5 is a top plan view illustrating the pressure control unit;
FIG. 6 is an enlarged cross-sectional view of a portion of the rechargeable battery of FIG. 2 where the pressure control unit is located;
FIG. 7 is a cross-sectional view showing a state in which the pressure control unit is deformed by the pressure inside a case;
FIG. 8 is a cross-sectional view illustrating a cap plate according to a first modified example;
FIG. 9 is a cross-sectional view illustrating a cap plate according to a second modified example;
FIG. 10 is a top plan view illustrating the pressure control unit according to a third modified example;
FIG. 11 is an exploded perspective view illustrating the pressure control unit according to a fourth modified example;
FIG. 12 is a top plan view illustrating the pressure control unit of FIG. 11;
FIG. 13 is a cross-sectional view illustrating the pressure control unit of FIG. 12; and
FIG. 14 is a cross-sectional view illustrating the pressure control unit according to a fifth modified example.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The preferred embodiments further illustrate the present disclosure specifically, but these embodiments are only meant to facilitate understanding for those of ordinary skill in the art of the present disclosure and may be embodied in many different forms, so they should not be construed as being limited to the embodiments set forth herein. Rather, these embodiments are provided so that this disclosure will be thorough and complete, and will fully convey the scope of the present inventive concept to those skilled in the art.

As used herein, the term "and/or" includes any one and all combinations of one or more of the associated listed items. In addition, it should be understood that when an element A is referred to as being "connected to" an element B, the element A may be directly connected to the element B, or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It should be further understood that the terms "comprise" or "include" and/or "comprising" or "including," when used in this specification, specify the presence of stated features, numbers, steps, operations, elements, and/or components, but do not preclude the presence or addition of one or more other features, numbers, steps, operations, elements, components, and/or groups thereof.

It should be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "beneath," "below," "lower," "above," "upper," and the like may be used herein for ease of description to describe one element or a feature's relationship to another element(s) or feature(s) as illustrated in the figures. It should be understood that such spatially relative terms are intended to encompass different orientations of the device in use or operation, in addition to the orientation depicted in the figures. For example, if the element or feature in the figures is turned over, elements described as "below" or "beneath" other elements or features would then be oriented "on" or "above" the other elements or features. Thus, the term "below", as an example, can encompass both orientations of above and below.

Below, a rechargeable battery according to an embodiment of the present disclosure will be described with reference to the drawings.

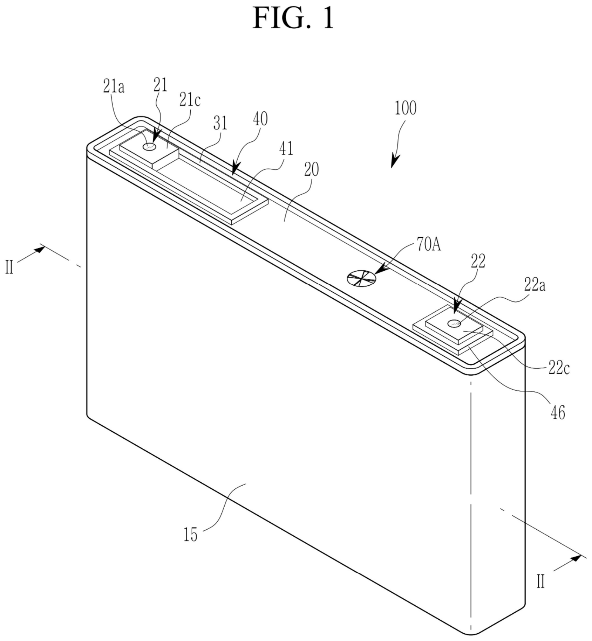

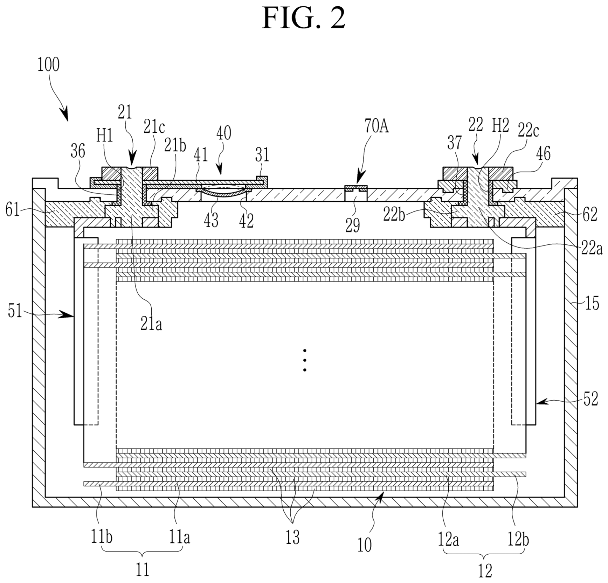

Referring to FIGS. 1 and 2, a rechargeable battery 100 according to an embodiment of the present disclosure includes an electrode assembly 10, a case 15, a cap plate 20, and a pressure control unit 70A (e.g., a pressure controller).

The electrode assembly 10 charges and discharges current. The electrode assembly 10 has a negative electrode 11 and a positive electrode 12 disposed on both surfaces of a separator 13, which is an electrical insulating material, and the negative electrode 11, the separator 13, and the positive electrode 12 may be wound into a jelly roll state. The electrode assembly 10 may also be a stack type in which the negative electrode 11, the separator 13, and the positive electrode 12 are laminated (e.g., or stacked).

The negative electrode 11 and the positive electrode 12 each include coated regions 11a and 12a on which an active material is applied to a current collector of a metal plate, and uncoated regions 11b and 12b on which no active material is applied.

The uncoated region 11b of the negative electrode 11 may be located at one end of the negative electrode 11 along the negative electrode 11 in the wound state. The uncoated region 12b of the positive electrode 12 may be located at one end of the positive electrode 12 along the positive electrode 12 in the wound state. The uncoated regions 11b and 12b are disposed at each end of the electrode assembly 10.

The case 15 accommodates the electrode assembly 10. The case 15 may be formed into a hexahedron to accommodate the electrode assembly 10 and there may be an electrolyte inside. One side of the case 15 may be open. In other words, the one side of the case 15 may include an open portion. The electrode assembly 10 may be inserted into the case 15 through the open portion of the case 15.

The cap plate 20 is installed in the opening of the case 15 and seals the case 15. For example, the case 15 and the cap plate 20 may be made of aluminum and welded together.

Additionally, the rechargeable battery 100 may include electrode terminals 21 and 22 installed on the cap plate 20. The electrode terminals 21 and 22 may include a negative electrode terminal 21 and a positive electrode terminal 22. In this case, the cap plate 20 includes terminal holes H1 and H2.

The negative electrode terminal 21 and the positive electrode terminal 22 are installed in the terminal holes H1 and H2 of the cap plate 20, respectively, and are electrically connected to the electrode assembly 10. That is, the negative electrode terminal 21 and the positive electrode terminal 22 are electrically connected to the negative electrode 11 and the positive electrode 12 of the electrode assembly 10, respectively. Therefore, the electrode assembly 10 is extended to the outside of the case 15 through the negative electrode terminal 21 and the positive electrode terminal 22.

The negative electrode terminal 21 and the positive electrode terminal 22 may be formed with the same structure on the inside of the cap plate 20. Therefore, the same structures in each of the negative electrode terminal 21 and the positive electrode terminal 22 will be described together, and since the outside of the cap plate 20 has different structures, the different structures will be described separately.

Each of the negative electrode terminal 21 and the positive electrode terminal 22 may include rivet terminals 21a and 22a installed in the terminal holes H1 and H2 of the cap plate 20, flanges 21b and 22b integrally formed with the rivet terminals 21a and 22a on the inside of the cap plate 20, and plate terminals 21c and 22c disposed on the outside of the cap plate 20 and connected to the rivet terminals 21a and 22a by riveting or welding.

A negative electrode gasket 36 and a positive electrode gasket 37 are respectively installed between the rivet terminals 21a and 22a of the negative electrode terminal 21 and the positive electrode terminal 22 and the inner surface of the terminal holes H1 and H2 of the cap plate 20, thereby sealing and electrically insulating the rivet terminals 21a and 22a of the negative electrode terminal 21 and the positive electrode terminal 22 and the cap plate 20.

A negative electrode gasket 36 and a positive electrode gasket 37 are installed to extend between the inner surface of the flanges 21b and 22b and the cap plate 20, thereby more reliably sealing and electrically insulating the space between the flanges 21b and 22b and the cap plate 20. That is, the negative electrode gasket 36 and the positive electrode gasket 37 prevent the electrolyte from leaking through the terminal holes H1 and H2.

A negative electrode lead tab 51 and a positive electrode lead tab 52 electrically connect the negative electrode terminal 21 and the positive electrode terminal 22 to the negative electrode 11 and the positive electrode 12 of the electrode assembly 10, respectively. That is, by connecting the negative electrode lead tab 51 and the positive electrode lead tab 52 to the bottom of the rivet terminals 21a and 22a and caulking the bottom, the negative electrode lead tab 51 and the positive electrode lead tab 52 may be connected to the bottom of the rivet terminals 21a and 22a while being supported by the flanges 21b and 22b.

A negative electrode insulating member 61 and a positive electrode insulating member 62 are respectively installed between the negative electrode lead tab 51, the positive electrode lead tab 52, and the cap plate 20, thereby electrically insulating the negative electrode lead tab 51, the positive electrode lead tab 52, and the cap plate 20.

In addition, one side of each of the negative electrode insulating member 61 and the positive electrode insulating member 62 is connected to the cap plate 20, and the other side surrounds the negative electrode lead tab 51, the positive electrode lead tab 52, the rivet terminals 21a and 22a, and the flanges 21b and 22b, thereby stabilizing their connection structure.

In some embodiments, the rechargeable battery 100 according to an embodiment of the present disclosure may further include an overcharge safety device (OSD) 40.

The overcharge safety device 40 may implement an external short-circuit when gas is generated inside the rechargeable battery 100 due to overcharging, causing the internal pressure to increase.

The overcharge safety device 40 for this purpose includes a short-circuit tab 41 that is separated or short-circuited and a short-circuit member 43. The short-circuit tab 41 is electrically connected to a rivet terminal 21a of the negative electrode terminal 21 and is disposed on the outside of the cap plate 20 with an insulating member 31 interposed therebetween.

The insulating member 31 is installed between the short-circuit tab 41 and the cap plate 20 to electrically insulate the short-circuit tab 41 and the cap plate 20. That is, the cap plate 20 remains electrically insulated from the negative electrode terminal 21.

By coupling the short-circuit tab 41 and a plate terminal 21c to the top of the rivet terminal 21a and caulking the top, the short-circuit tab 41 and the plate terminal 21c are coupled to the top of the rivet terminal 21a. Accordingly, the short-circuit tab 41 and the plate terminal 21c are affixed to the cap plate 20 with the insulating member 31 interposed therebetween.

The short-circuit member 43 is installed in a short-circuit hole 42 formed in the cap plate 20. The short-circuit tab 41 is connected to the negative electrode terminal 21 and extends along the outside of the short-circuit member 43.

Accordingly, the short-circuit tab 41 and the short-circuit member 43 correspond to each other in the short-circuit hole 42, face each other, and maintain a spaced state (solid line state), and when the internal pressure of the rechargeable battery 100 increases due to overcharge and reaches excessive pressure, a short-circuit state (imaginary line state) may be implemented by reversing the short-circuit member 43.

In other embodiments according to the disclosure, the rechargeable battery 100 may further include a top plate 46.

The top plate 46 is installed on the positive electrode terminal 22. More specifically, the top plate 46 electrically connects a plate terminal 22c of the positive electrode terminal 22 and the cap plate 20. For example, the top plate 46 is interposed between the plate terminal 22c and the cap plate 20 and penetrates the rivet terminal 22a.

Therefore, by coupling the top plate 46 and the plate terminal 22c to the top of the rivet terminal 22a and caulking the top, the top plate 46 and the plate terminal 22c are coupled to the top of the rivet terminal 22a. The plate terminal 22c is installed on the outside of the cap plate 20 with the top plate 46 interposed therebetween.

In still other embodiments, the positive electrode gasket 37 may be installed to extend between the rivet terminal 22a and the top plate 46. The positive electrode gasket 37 prevents direct electrical connection between the rivet terminal 22a and the top plate 46. The rivet terminal 22a is electrically connected to the top plate 46 through the plate terminal 22c.

In still other embodiments, the structure of the cap plate 20 may vary.

The pressure control unit 70A may be installed in a through hole 29 of the cap plate 20, is open when the pressure inside the case 15 is higher than or equal to the reference value, and is closed when the pressure inside the case 15 is lower than the reference value. Accordingly, it is possible to prevent the pressure inside the case 15 from increasing, and also to enable repeated operation. Here, the above reference value may vary depending on the design of the rechargeable battery 100.

In other embodiments, the through hole 29 may be an electrolyte injection hole through which an electrolyte is injected. In still other embodiments, the through hole 29 may be a hole that penetrates a part of the cap plate 20 separately from the electrolyte injection hole.

In the case of conventional rechargeable batteries, if the vent portion is open due to pressure inside the case, the vent portion cannot be resealed, making reuse impossible. Additionally, the electrolyte may flow out through the open vent portion.

In other embodiments, the rechargeable battery 100 according to an embodiment of the present disclosure as described above may control the pressure inside the case 15 with the pressure control unit 70A, and when the pressure inside the case 15 becomes lower than the reference value, the pressure control unit 70A may maintain the initial shape.

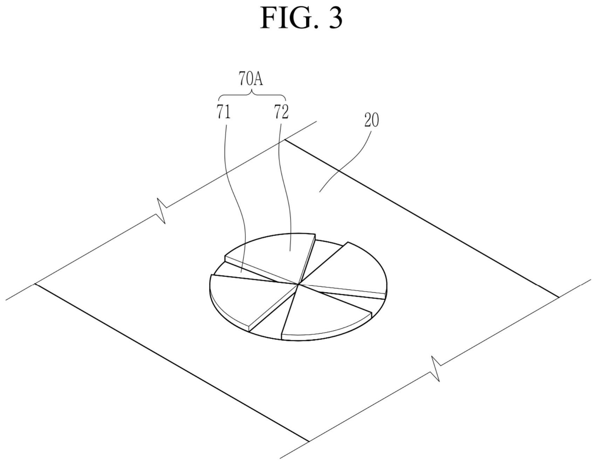

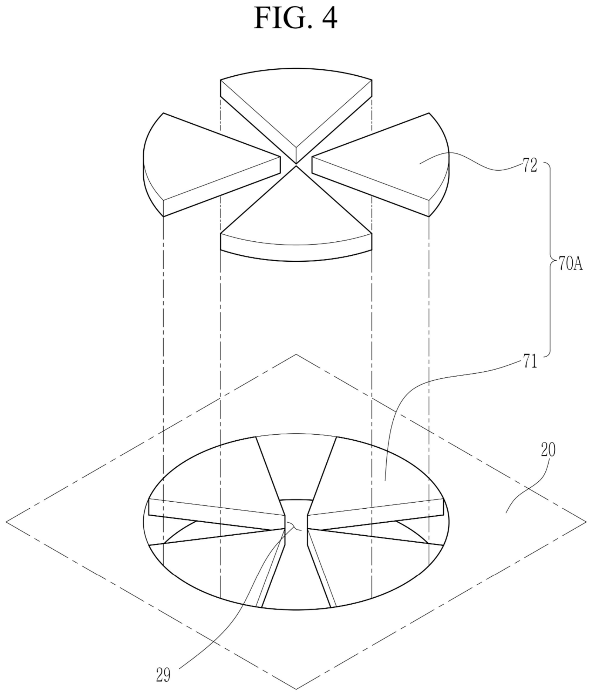

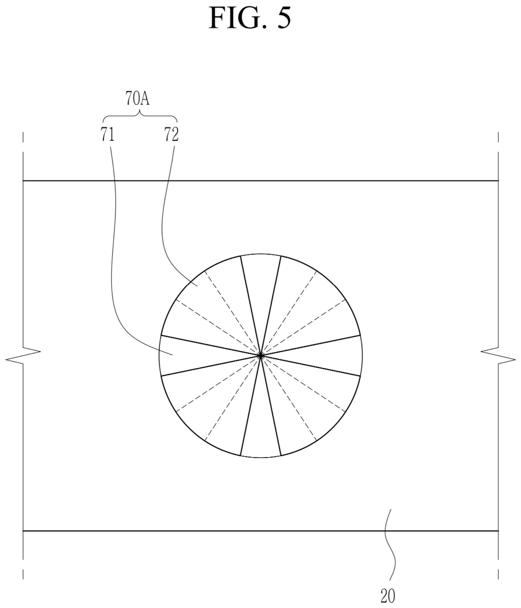

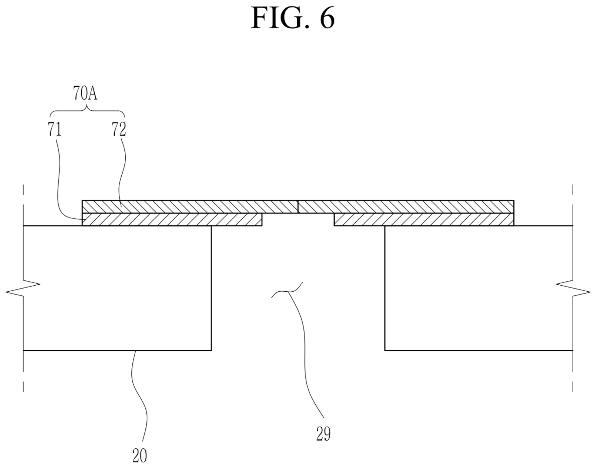

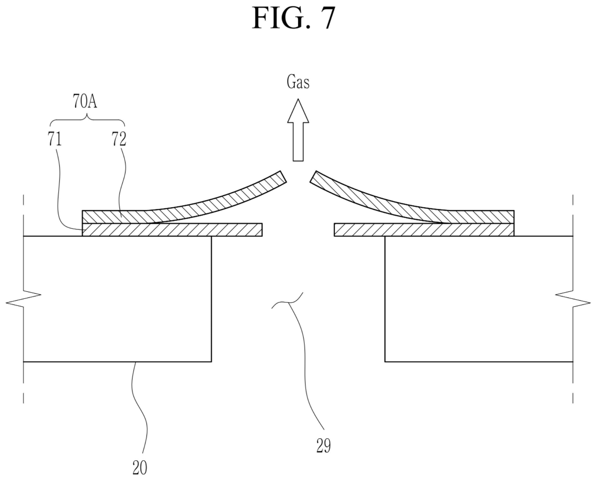

FIG. 3 is an enlarged perspective view of a pressure control unit included in the rechargeable battery of FIG. 1, FIG. 4 is an exploded perspective view showing the pressure control unit, FIG. 5 is a top plan view illustrating the pressure control unit, FIG. 6 is an enlarged cross-sectional view of a portion of the rechargeable battery of FIG. 2 where the pressure control unit is located, and FIG. 7 is a cross-sectional view showing a state in which the pressure control unit is deformed by the pressure inside a case.

Referring to FIGS. 3 to 7, the pressure control unit 70A may include, for example, a plurality of first opening and closing portions 71 and a plurality of second opening and closing portions 72.

One side of the plurality of first opening and closing portions 71 is coupled to the inside of the through hole 29 or the cap plate 20 on the outside of the through hole 29, and the other side is positioned adjacent to the center of the through hole 29. Each of the plurality of first opening and closing portions 71 is positioned at predetermined angles based on (e.g., with respect to) the center of the through hole 29. For example, if there are four first opening and closing portions 71, the first opening and closing portions 71 may be positioned at 90-degree intervals. The plurality of first opening and closing portions 71 may be positioned on the same virtual plane (e.g., may be coplanar with each other).

One side of the plurality of second opening and closing portions 72 may be coupled to the plurality of first opening and closing portions 71, and the other side may be positioned at the center of the through hole 29. That is, the plurality of first opening and closing portions 71 and the plurality of second opening and closing portions 72 may be sequentially disposed at the through hole 29.

The plurality of second opening and closing portions 72 may be positioned at predetermined angles based on (e.g., with respect to) the center of the through hole 29. For example, if there are four second opening and closing portions 72, the second opening and closing portions 72 may be positioned at 90-degree intervals.

The plurality of second opening and closing portions 72 may be made of an elastically deformable material. The plurality of second opening and closing portions 72 may be (altogether), for example, a thin plate spring.

The operation process of the pressure control unit 70A is described as follows. As shown in FIG. 6, if the pressure value inside the case 15 is lower than the reference value, the pressure control unit 70A keeps the through hole 29 closed.

And, as shown in FIG. 7, when gas is generated inside the case 15 and the pressure increases, the plurality of second opening and closing portions 72 may be open for a certain period of time while being elastically deformed.

Thereafter, as shown in FIG. 6, when gas is discharged from inside the case 15, the second opening and closing portion 72 may be restored to its initial shape. That is, the pressure control unit 70A may keep the through hole 29 closed except when discharging gas inside the case 15.

For this purpose, the plurality of second opening and closing portions 72 may be positioned on the same virtual plane. Accordingly, two adjacent second opening and closing portions in the plurality of second opening and closing portions 72 may be in close contact with each other (e.g., touching or directly contacting).

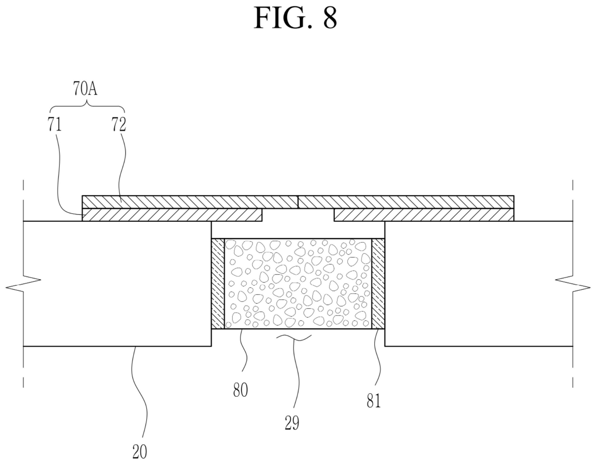

Referring to FIG. 8, the cap plate 20 according to a first modified example may further include an electrolyte blocking member 80.

The electrolyte blocking member 80 is installed in the through hole 29 and may allow gas to pass through while restricting the movement of the electrolyte. The electrolyte blocking member 80 for this purpose may be made of a liquid absorbent material. The liquid absorbent material may include, for example, at least one of pulp, non-woven fabric, and superabsorbent resin.

In other embodiments, the cap plate 20 may further include an adhesive portion 81.

The adhesive portion 81 may be interposed between the inner surface surrounding the through hole 29 and the electrolyte blocking member 80. The adhesive portion 81 may improve the adhesive strength between the electrolyte blocking member 80 and the cap plate 20, thereby preventing the electrolyte blocking member 80 from being separated from the cap plate 20.

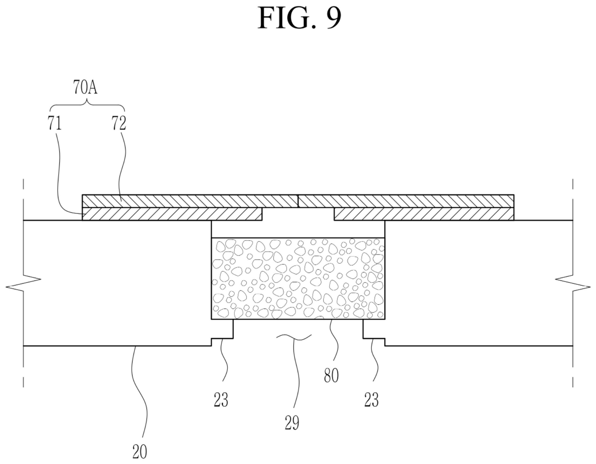

Referring to FIG. 9, the cap plate 20 according to a second modified example may further include a protrusion 23.

The protrusion 23 may protrude from the inner surface surrounding the through hole 29 to restrict the electrolyte blocking member 80 from moving into the case 15. Unlike the cap plate 20 described above, the electrolyte blocking member 80 does not require the adhesive portion 81, thereby simplifying the manufacturing process.

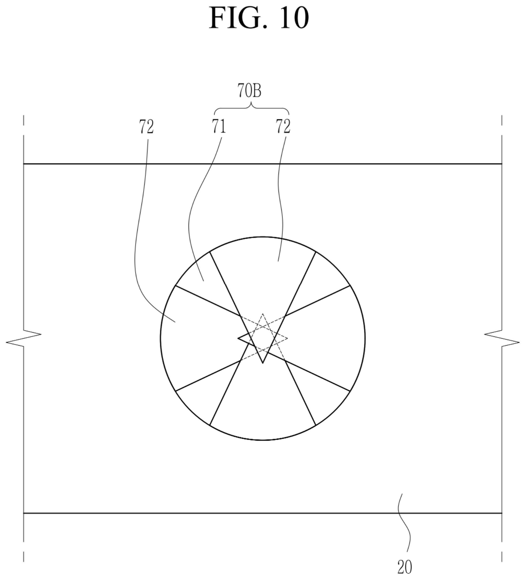

FIG. 10 is a top plan view illustrating the pressure control unit according to a third modified example.

Referring to FIG. 10, a pressure control unit 70B may be positioned so that the ends of each of the plurality of second opening and closing portions 72 overlap each other. The second opening and closing portions 72 may be made relatively longer compared to the opening and closing portion of the pressure control unit 70A (see FIG. 5) described above for the previous embodiments.

The free end of each of the plurality of second opening and closing portions 72 of the pressure control unit 70A described above is positioned at the center of the through hole 29, but the free end of the plurality of second opening and closing portions 72 of the pressure control unit 70B according to this third modified example may be positioned away from the center of the through hole 29.

The pressure control unit 70B according to this third modified example may reliably block the through hole 29.

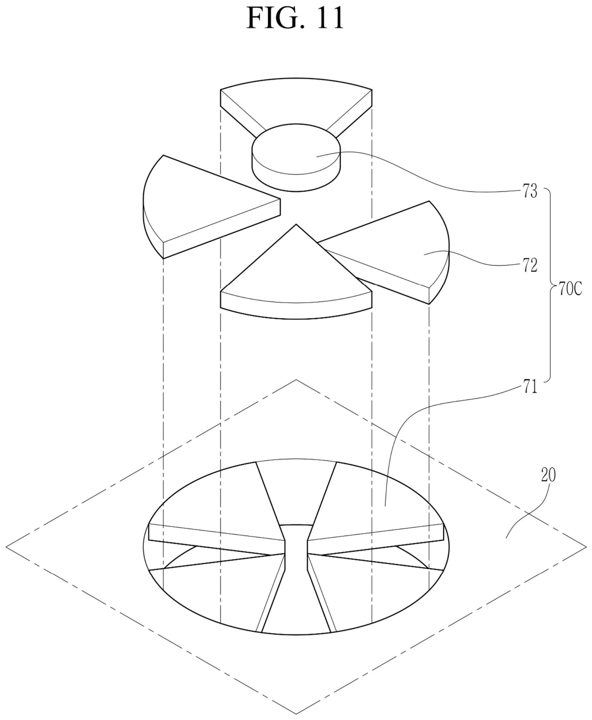

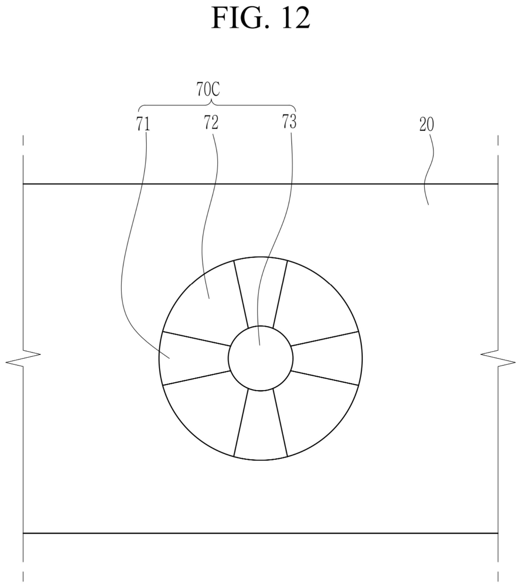

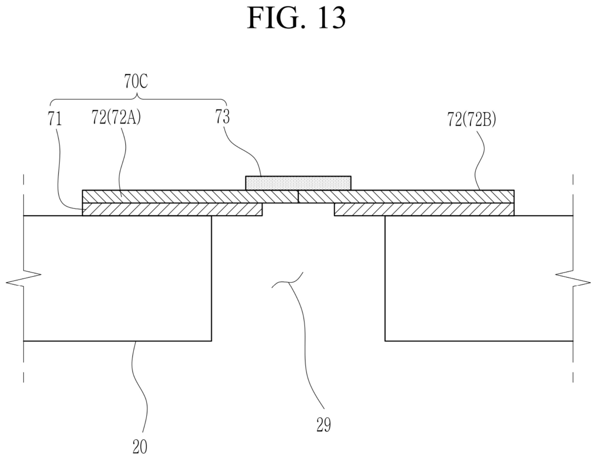

FIG. 11 is an exploded perspective view illustrating the pressure control unit according to a fourth modified example, FIG. 12 is a top plan view illustrating the pressure control unit of FIG. 11, and FIG. 13 is a cross-sectional view illustrating the pressure control unit of FIG. 12.

Referring to FIGS. 11 to 13, a pressure control unit 70C may include the plurality of first opening and closing portions 71, the plurality of second opening and closing portions 72, and a third opening and closing portion 73. Here, the plurality of first opening and closing portions 71 and the plurality of second opening and closing portions 72 may be the same as the plurality of first opening and closing portions 71 and the plurality of second opening and closing portions 72 of the pressure control unit 70A (see FIG. 5) described above, so a description thereof will be omitted.

The third opening and closing portion 73 may be coupled with one or more of the second opening and closing portions 72 among the plurality of second opening and closing portions 72 (e.g., the third opening and closing portion 73 may be attached to one of the plurality of second opening and closing portions 72, for example, using an appropriate adhesive or other attachment means). Further, the third opening and closing portion 73 may be positioned at the center of the through hole 29. In addition, the third opening and closing portion 73 may be formed integrally with one or more of the second opening and closing portions 72 among the plurality of second opening and closing portions 72.

The third opening and closing portion 73 may block a fine gap that may occur at the center where each of the plurality of second opening and closing portions 72 meet. The third opening and closing portion 73 for this purpose may have a disc shape. However, the third opening and closing portion 73 may be any shape that may reliably block the gap.

The pressure control unit 70C according to the fourth modified example described above may seal a fine gap more reliably than the pressure control unit 70A or 70B described above, thereby preventing the electrolyte from leaking out when the pressure of the case 15 does not exceed the reference value.

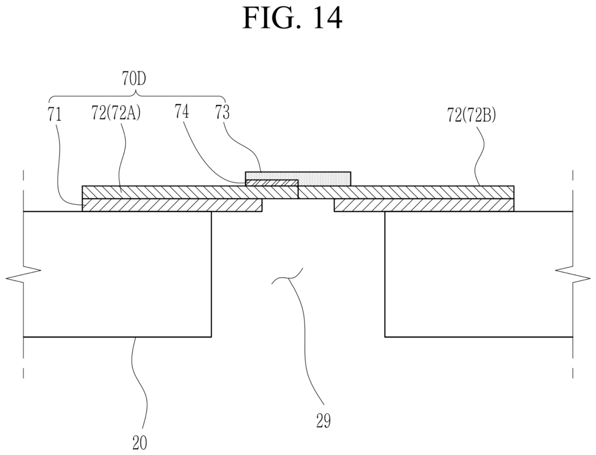

FIG. 14 is a cross-sectional view illustrating the pressure control unit according to a fifth modified example.

Referring to FIG. 14, a pressure control unit 70D may further include a sealing member 74.

The sealing member 74 is installed on the surface of the third opening and closing portion 73 of the fourth modified embodiment, facing one of the plurality of second opening and closing portions 72. The sealing member 74 may be, for example, silicone or rubber.

As described above, the third opening and closing portion 73 is connected to one of the plurality of second opening and closing portions 72. Therefore, the sealing member 74 may be positioned on the lower surface of the third opening and closing portion 73 except for the second opening and closing portion 72 coupled with the third opening and closing portion 73 based on the direction shown in the drawing.

The sealing member 74 as described above may more reliably seal the gap between the second opening and closing portion 72 and the third opening and closing portion 73.

According to an embodiment of the present disclosure as described above, the rechargeable battery 100 may be controlled so that the pressure inside the case 15 does not exceed the reference value by the pressure control unit 70D, and the pressure control unit 70D is not damaged by the pressure. Accordingly, the rechargeable battery 100 may be used for its maximum lifespan.

In conventional rechargeable batteries, a vent hole in a cap plate is usually sealed by a vent plate. When the internal pressure of the rechargeable battery reaches a set pressure (excess pressure), the vent plate is cut to open the vent hole.

A vent portion is made of a thin aluminum film, and the pressure at which a vent opens is controlled by adjusting the thickness of the aluminum film. Once the vent portion is open, it cannot be resealed, so the lifespan of the rechargeable battery is effectively over. Additionally, there is a problem with the electrolyte inside a case leaking out through the open vent portion.

A rechargeable battery according to the present disclosure may be controlled so that the pressure inside the case does not exceed the reference value by the pressure control unit, and the pressure control unit is not damaged by the pressure. Accordingly, the rechargeable battery may be used for its maximum lifespan.

While the present disclosure has been described in connection with what is presently considered to be practical embodiments, the drawings and the detailed description of the present disclosure which are described above are merely illustrative, are just used for the purpose of describing the present disclosure, and are not used for qualifying the meaning or limiting the scope of the present disclosure, which is disclosed in the appended claims. Therefore, it should be understood by those skilled in the art that various modifications and other equivalent embodiments may be made from the present disclosure. Accordingly, an actual technical protection scope of the present disclosure is to be defined by the claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A rechargeable battery, comprising:
an electrode assembly;
a case accommodating the electrode assembly, the case including one side having an open portion;
a cap plate sealing the open portion of the case, the cap plate including a through hole; and
a pressure controller in the through hole of the cap plate, the pressure controller being open when the pressure inside the case is higher than or equal to a reference value and closed when a pressure inside the case is lower than the reference value.

2. The rechargeable battery as claimed in claim 1, wherein the pressure controller comprises:
a plurality of first opening and closing portions, one side of each being coupled to an inside of the through hole or the cap plate on the outside of the through hole, another side of each being adjacent to a center of the through hole, and the plurality of first opening and closing portions being at predetermined angles based on the center of the through hole; and
a plurality of second opening and closing portions, one side of each being coupled to a corresponding one of the plurality of first opening and closing portions, another side of each being at the center of the through hole, and the plurality of second opening and closing portions being at predetermined angles based on the center of the through hole.

3. The rechargeable battery as claimed in claim 2, wherein ends of each of the plurality of second opening and closing portions overlap each other.

4. The rechargeable battery as claimed in claim 1, wherein the pressure controller comprises:
a plurality of first opening and closing portions, one side of each being coupled to an inside of the through hole or the cap plate on the outside of the through hole, another side of each being adjacent to a center of the through hole, and the plurality of first opening and closing portions being at predetermined angles based on the center of the through hole;
a plurality of second opening and closing portions, one side of each being coupled to a corresponding one of the plurality of first opening and closing portions, another side of each being at the center of the through hole, and the plurality of second opening and closing portions being at predetermined angles based on the center of the through hole; and
a third opening and closing portion coupled to at least one of the plurality of second opening and closing portions, the third opening and closing portion being at the center of the through hole.

5. The rechargeable battery as claimed in claim 4, wherein the third opening and closing portion has a disc shape.

6. The rechargeable battery as claimed in claim 4 or claim 5, wherein the third opening and closing portion is integral with at least one of the plurality of second opening and closing portions.

7. The rechargeable battery as claimed in any one of claims 4 to 6, further comprising a sealing member on a surface of the third opening and closing portion facing the plurality of second opening and closing portions.

8. The rechargeable battery as claimed in claim 7, wherein the sealing member includes silicone or rubber.

9. The rechargeable battery as claimed in any one of claims 2 to 8, wherein the plurality of second opening and closing portions include an elastically deformable material.

10. The rechargeable battery as claimed in any one of claims 2 to 9, wherein the plurality of second opening and closing portions are together a thin plate spring.

11. The rechargeable battery as claimed in any one of claims 2 to 10,
wherein the plurality of first opening and closing portions are on a same virtual plane.

12. The rechargeable battery as claimed in any one of claims 2 or 4 to 11,
wherein the plurality of second opening and closing portions are on a same virtual plane.

13. The rechargeable battery as claimed in any one of the preceding claims, wherein the cap plate further comprises an electrolyte blocking member in the through hole, allowing gas to pass through but restricting movement of an electrolyte, and optionally wherein the cap plate further comprises an adhesive portion between an inner surface surrounding the through hole and the electrolyte blocking member, and/or optionally wherein the cap plate further comprises a protrusion protruding from an inner surface surrounding the through hole to prevent the electrolyte blocking member from moving into the case, and/or optionally wherein the electrolyte blocking member includes a liquid absorbent material, optionally wherein the liquid absorbent material comprises at least one of pulp, non-woven fabric, and superabsorbent resin.

14. The rechargeable battery as claimed in any one of the preceding claims, wherein the case accommodates an electrolyte.

15. The rechargeable battery as claimed in any one of the preceding claims, wherein the case has a hexahedron shape.
